# EUROPÄISCHE PATENTSCHRIFT

(11) **EP 3 268 830 B1**
(45) Veröffentlichungstag und Bekanntmachung des Hinweises auf die Patenterteilung: **19.02.2020**
(21) Anmeldenummer: 16700385.4
(22) Anmeldetag: 08.01.2016
(51) Int. Cl.: G05D 7/01

(54) **DURCHFLUSSMENGENREGLER-EINHEIT**
FLOW-RATE CONTROLLER UNIT
UNITÉ DE RÉGULATION DU DÉBIT

(30) Priorität: 09.03.2015 DE 202015001754 U
(43) Veröffentlichungstag der Anmeldung: 17.01.2018
(73) Patentinhaber: Neoperl GmbH, 79379 Müllheim (DE)
(72) Erfinder: TWITCHETT, Simon, Kidderminster DY11 7XF (GB)
(74) Vertreter: Börjes-Pestalozza, Henrich
(86) Internationale Anmeldenummer: PCT/EP2016/000027
(87) Internationale Veröffentlichungsnummer: WO 2016/142020

(56) Entgegenhaltungen:
- DE-U1-202011 100 800
- DE-U1-202011 108 603

## Beschreibung

Die Erfindung betrifft eine Durchflussmengenregler-Einheit, die ein in eine Fluidleitung einsetzbares Einsetzgehäuse hat, in dem mehrere Durchströmwege vorgesehen sind, von denen in wenigstens einem Durchströmweg jeweils ein Durchflussmengenregler angeordnet ist, der die durch ihn pro Zeiteinheit durchfließende Fluidmenge auf einen druckunabhängigen festgelegten Durchflusswert einregelt und von denen in mindestens einem weiteren Durchströmweg jeweils ein Schließventil vorgesehen ist, das von einer Offenstellung unter dem Druck des anströmenden Fluids gegen eine Rückstellkraft in eine Schließstellung bewegbar ist, wobei der wenigstens eine Durchflussmengenregler und das mindestens eine Schließventil jeweils einen ringförmigen Drosselbeziehungsweise Ventilkörper aus elastischem Material haben, der sich unter dem Druck des anströmenden Fluids derart verformt, dass der wenigstens eine Durchflussmengenregler einen Regelspalt verengt und das mindestens eine Schließventil zumindest eine Ventilöffnung verschließt, wobei im Einsetzgehäuse Ringkanäle vorgesehen sind, von denen zumindest ein erster Ringkanal als Schließventil eine Gehäusefläche des Einsetzgehäuses umgrenzt, in welcher Gehäusefläche wenigstens ein, in dieser Gehäusefläche relativ zum ersten Ringkanal innenliegender zweiter Ringkanal als Durchflussmengenregler vorgesehen ist, und wobei im Hülseninnen des hülsenförmig ausgebildeten Einsetzgehäuses eine quer zur Durchströmrichtung orientierte Trägerplatte vorgesehen ist, welche Trägerplatte die Ringkanäle aufweist.

Aus der DE 20 2011 100 800 U1 ist eine Durchflussmengenregler-Einheit der eingangs erwähnten Art mit einem Einsetzgehäuse vorbekannt, das in eine Fluidleitung einsetzbar ist. In diesem Einsetzgehäuse sind mehrere Durchströmwege vorgesehen, von denen in dem einen ersten Durchströmweg ein Durchflussmengenregler angeordnet ist, der die durch ihn pro Zeiteinheit durchfließende Fluidmenge auf einen druckunabhängigen festgelegten Durchflusswert einregelt und von denen in einem außenliegenden weiteren Durchströmweg ein Schließventil vorgesehen ist, das von einer Offenstellung unter dem Druck des anströmenden Fluids gegen eine Rückstellkraft in eine Schließstellung bewegbar ist, wobei der wenigstens eine Durchflussmengenregler und das mindestens eine Schließventil jeweils einen ringförmigen Drossel- bzw. Ventilkörper aus elastischem Material haben, der sich unter dem Druck des anströmenden Fluids derart verformt, dass der wenigstens eine Durchflussmengenregler einen Regelspalt verengt und das mindestens eine Schließventil zumindest eine Ventilöffnung verschließt. Dabei umschließt der dem Schließventil zugeordnete außenliegende erste Ringkanal eine Gehäusefläche, in welcher Gehäusefläche der innenliegende zweite Ringkanal des Durchflussmengenreglers konzentrisch angeordnet ist.

Aus der DE 20 2011 108 603 U1 kennt man bereits eine Durchflussmengenregler-Einheit mit einem, sich über den lichten Querschnitt eines Fluidleitungsabschnitts erstreckenden Trägerelement. Auf diesem Trägerelement sind voneinander beabstandete Einsetzöffnungen vorgesehen, von denen in zumindest zwei Einsetzöffnungen jeweils ein Durchflussmengenregler angeordnet ist. Jeder dieser Durchflussmengenregler weist einen ringförmigen Drosselkörper aus elastischem Material auf, der einen Regelkern umgreift und zwischen sich und einer inneren und/oder äußeren profilierten Umfangswandung einen sich unter dem Druck des durchströmenden Fluids verändernden Steuerspalt begrenzt. Die DE 20 2011 108 603 U1 lehrt, in einem plattenförmigen Trägerelement Einsetzöffnungen vorzusehen, in welchen Einsetzöffnungen separate Funktionseinheiten gleicher Art eingesetzt werden können, die sich in ihren Eigenschaftsschwankungen ausgleichen, wobei einzelne Einsetzöffnungen bei Bedarf auch mit einem Stopfen verschlossen werden können, wenn die Leistung der Gesamt-Einheit auf die Summe der Einzelleistungen der vorhandenen Funktionseinheiten begrenzt werden soll.

Aus der WO 2012/156002 ist bereits eine Durchflussmengenregler-Einheit vorbekannt, die ein in eine Fluidleitung und insbesondere in eine Wasserversorgungsleitung einsetzbares Einsetzgehäuse hat. In dem Einsetzgehäuse der vorbekannten Durchflussmengenregler-Einheit sind zwei Durchströmwege vorgesehen, die durch koaxial zueinander angeordnete Ringkanäle gebildet werden. Während in den einen Ringkanal der ringförmige und aus elastischem Material hergestellte Drosselkörper eines Durchflussmengenreglers eingelegt ist, ist in dem anderen Ringkanal ein ebenfalls ringförmiger und aus einem elastisch verformbaren Material hergestellter Ventilkörper eines Schließventils vorgesehen. Der Drosselkörper begrenzt zwischen sich und einer eine Regelprofilierung tragenden Kanalwandung einen Steuerspalt, dessen Durchtrittsquerschnitt durch den sich unter der beim Durchströmen bildenden Druckdifferenz verformenden Drosselkörper veränderbar ist. Demgegenüber bewegt sich der Ventilkörper des Schließventils unter dem Druck des durchströmenden Mediums von einer Offenstellung gegen eine Rückstellkraft in eine Schließstellung, in welcher Schließstellung der Ventilkörper wenigstens eine Ventilöffnung verschließt. Da die für den Durchflussmengenregler einerseits und das Schließventil andererseits vorgesehenen Ringkanäle koaxial zueinander im Einsetzgehäuse vorgesehen sind, und da der Gehäusequerschnitt die Ringkanäle und auch die Ringkanäle einander begrenzen, sind die Variationsmöglichkeiten bei der vorbekannten Durchflussmengenregler-Einheit begrenzt. Zwar können über das bei geringen Drücken anfänglich noch offene Schließventil zusätzliche Wassermengen durch die Durchflussmengenregler-Einheit durchgeleitet werden, - jedoch ist das Regelverhalten der vorbekannten Durchflussmengenregler-Einheit bei hohen Drücken von dem Regelverhalten des verwendeten Durchflussmengenreglers abhängig.

Es besteht daher die Aufgabe, eine Durchflussmengenregler-Einheit der eingangs erwähnten Art zu schaffen, die in einem sehr breiten Druckbereich, nämlich sowohl bei geringen Drücken als auch bei hohen Drücken, arbeitet und den geforderten Durchfluss einzuregeln vermag.

Die erfindungsgemäße Lösung dieser Aufgabe besteht bei der Durchflussmengenregler-Einheit der eingangs erwähnten Art insbesondere darin, dass in der vom ersten Ringkanal des mindestens einen Schließventils umgrenzten Gehäusefläche wenigstens zwei innenliegende zweite Ringkanäle von jeweils einem der Durchflussmengenregler vorgesehen sind, dass die Mittelpunkte dieser wenigstens zwei innenliegenden zweiten Ringkanäle jeweils außerhalb der von den übrigen innenliegenden Ringkanälen der Durchflussmengenregler umgrenzten Teilbereiche der Gehäusefläche angeordnet sind, dass die Drossel- und Ventilkörper mittels eines gemeinsamen Sicherungselements in den ihnen zugeordneten Ringkanälen gesichert sind, und dass das gemeinsame Sicherungselement an dem zuströmseitig vor der Trägerplatte angeordneten Gehäuseteilbereich an dem Gehäuseinnenumfang gehalten ist.

Die erfindungsgemäße Durchflussmengenregler-Einheit weist ein Einsetzgehäuse auf, das in eine Fluidleitung einsetzbar ist. Im Einsetzgehäuse dieser Durchflussmengenregler-Einheit sind mehrere Durchströmwege vorgesehen, von denen in wenigstens einem Durchströmweg jeweils ein Durchflussmengenregler angeordnet ist, der die durch ihn pro Zeiteinheit durchfließende Fluidmenge auf den geforderten Durchflusswert einzuregeln hat und von denen in mindestens einem weiteren Durchströmweg jeweils ein Schließventil vorgesehen ist, das von einer Offenstellung unter dem Druck des anströmenden Fluids gegen eine Rückstellkraft in eine Schließstellung bewegbar ist. Bei niedrigen Drücken, bei denen das mindestens eine Schließventil in seiner Offenstellung verharrt, kann über das Schließventil eine zusätzliche Fluidmenge durch die erfindungsgemäße Durchflussmengenregler-Einheit strömen. Mit demgegenüber steigendem Druck des Fluids bewegt sich der Ventilkörper des Schließventils in die Schließstellung, so dass nun die Durchflussmengenregler den Durchfluss der erfindungsgemäßen Durchflussmengenregler-Einheit einregeln können. Dabei können die Durchflussmengenregler nicht nur auf denselben Maximalwert des Durchflusses festgelegt sein, sondern sich auch in der Weise ergänzen, dass diese Durchflussmengenregler sich auf unterschiedliche Maximalwerte der Durchflussleistung einregeln. Dabei weisen die wenigstens zwei Durchflussmengenregler und das mindestens eine Schließventil jeweils einen ringförmigen Drossel- beziehungsweise Ventilkörper aus elastischem Material auf, der sich unter dem Druck des anströmenden Fluids derart verformt, dass die wenigstens zwei Durchflussmengenregler einen Regelspalt verengen und das mindestens eine Schließventil zumindest eine Ventilöffnung verschließt. Im Einsetzgehäuse der erfindungsgemäßen Durchflussmengenregler-Einheit ist dazu ein erster äußerer Ringkanal vorgesehen, der dem Schließventil zugeordnet ist. Dieser erste äußere Ringkanal umgrenzt eine Gehäusefläche des Einsetzgehäuses, in der wenigstens zwei innenliegende zweite Ringkanäle von jeweils einem der Durchflussmengenregler vorgesehen sind, deren Mittelpunkte jeweils außerhalb der von den anderen innenliegenden zweiten Ringkanälen umgrenzten Gehäusefläche angeordnet ist. Durch diese, in ihrer Anordnung weitestgehend unabhängigen Ringkanäle lässt sich die erfindungsgemäße Durchflussmengenregler-Einheit derart auslegen, dass sie sowohl bei niedrigen Drücken als auch bei hohen Drücken funktionsgerecht und vorteilhaft einsetzbar ist.

Um die erfindungsgemäße Durchflussmengenregler-Einheit auf einfache Weise in die üblichen Leitungsquerschnitte einer sanitären Versorgungsleitung einsetzen zu können, ist das Einsetzgehäuse hülsenförmig ausgebildet. Dabei ist im Hülseninneren des Einsetzgehäuses eine quer zur Durchströmrichtung orientierte Trägerplatte vorgesehen, welche Trägerplatte die Ringkanäle aufweist. Da diese Trägerplatte die Ringkanäle aufweist, lassen sich die für die Durchflussmengenregler einerseits und das zumindest eine Schließventil andererseits vorgesehenen Ringkanäle besonders einfach in das Einsetzgehäuse der erfindungsgemäßen Durchflussmengenregler-Einheit einarbeiten. Da erfindungsgemäß die Drossel- und Ventilkörper mittels eines gemeinsamen Sicherungselementes in den ihnen zugeordneten Ringkanälen gesichert sind, wird die Herstellbarkeit der erfindungsgemäßen Durchflussmengenregler-Einheit aus nur wenigen Bauteilen noch zusätzlich begünstigt. Damit die vorzugsweise von der zuströmseitigen Gehäusestirnseite aus in das Gehäuseinnere des Einsetzgehäuses eingesetzten Drossel- und Ventilkörper im Einsetzgehäuse gesichert werden können, ist erfindungsgemäß vorgesehen, dass das gemeinsame Sicherungselement an dem zuströmseitig vor der Trägerplatte angeordneten Gehäuseteilbereich an dessen Gehäuseinnenumfang gehalten ist.

Um die einfache Herstellbarkeit der erfindungsgemäßen Durchflussmengenregler-Einheit noch zusätzlich zu begünstigen und um diese Durchflussmengenregler-Einheit aus möglichst wenigen Bauteilen montieren zu können, ist es vorteilhaft, wenn die Trägerplatte in das Einsetzgehäuse einstückig eingeformt ist.

Dabei wird eine Ausführungsform gemäß der Erfindung bevorzugt, bei der die Drossel- oder Ventilkörper von der zuströmseitigen Gehäusestirnseite aus in die in der Trägerplatte befindlichen Ringkanäle eingesetzt sind.

Dabei sieht eine bevorzugte Ausführungsform gemäß der Erfindung vor, dass das gemeinsame Sicherungselement mit seinem außenliegenden Umfangsrand in einer Haltenut gehalten ist, die an dem vor der Trägerplatte angeordneten Gehäuseteilbereich an dessen Gehäuseinnenumfang vorgesehen ist.

Eine besonders einfache und leicht herstellbare Ausführungsform gemäß der Erfindung sieht vor, dass das Sicherungselement einen Sicherungselemente-Kern hat, von dem aus vorzugsweise drei Sicherungsarme radial nach außen vorstehen.

Damit das Sicherungselement nicht den Durchflussquerschnitt zur erfindungsgemäßen Durchflussmengenregler-Einheit übermäßig verengt und damit das Fluid am Sicherungselement vorbei auch in größeren Mengen gut in das Hülseninnere des Einsetzgehäuse einfließen kann, ist es vorteilhaft, wenn das Sicherungselement in seinem Sicherungselemente-Kern eine zentrale Durchflussöffnung aufweist.

Eine bevorzugte Weiterbildung gemäß der Erfindung sieht vor, dass die Mittelpunkte der innenliegenden Ringkanäle in einem Dreieck zueinander angeordnet sind. Die dreieckförmige Anordnung der innenliegenden Ringkanäle begünstigt die kompakte Bauweise der erfindungsgemäßen Durchflussmengenregler-Einheit auch in einem vergleichsweise kleinen Leitungsquerschnitt.

Um die erfindungsgemäße Durchflussmengenregler-Einheit leicht handhaben und beispielsweise in eine sanitäre Versorgungsleitung einsetzen oder auch aus einer Einbauöffnung herausziehen zu können, ist es vorteilhaft, wenn die Trägerplatte an zumindest einer Stirnseite und vorzugsweise an ihrer zuströmseitigen Stirnseite einen vorstehenden Handhabungsstift trägt. Dabei sieht eine bevorzugte Ausführungsform gemäß der Erfindung vor, dass dieser Handhabungsstift etwa koaxial zur Gehäuse-Längsachse des Einsetzgehäuses an der Trägerplatte vorsteht.

Der erste äußere Ringkanal kann einem, im Querschnitt vergleichsweise großen Durchflussmengenregler zugeordnet sein, während demgegenüber von den innenliegenden Ringkanälen zumindest zwei für demgegenüber kleinere Durchflussmengenregler und der wenigstens eine verbleibende innenliegende Ringkanal für ein Schließventil verwendet wird. Eine besonders vorteilhafte Ausführungsform sieht demgegenüber vor, dass der äußere erste Ringkanal dem wenigstens einen Schließventil zugeordnet ist und dass von den innenliegenden Ringkanälen zumindest zwei jeweils einem Durchflussmengenregler zugeordnet sind, während zumindest ein weiterer innenliegender Ringkanal dem Schließventil dient.

Die kompakte Bauweise der erfindungsgemäßen Durchflussmengenregler-Einheit wird noch begünstigt, wenn die Regelkörper der Durchflussmengenregler zwischen sich und einer Regelprofilierung den Steuerspalt umgrenzen, dessen Durchschnittsquerschnitt durch den sich unter der beim Durchströmen bildenden Druckdifferenz verformenden Drosselkörper veränderbar ist.

Dabei kann die Regelprofilierung an der innenliegenden und zusätzlich oder stattdessen an der außenliegenden Umfangs- oder Kanalwand des zugeordneten Ringkanales vorgesehen sein.

Bei einer bevorzugten Ausführungsform der erfindungsgemäßen Durchflussmengenregler-Einheit ist vorgesehen, dass der Ringkanal des wenigstens einen Schließventiles im Bereich seines Kanalgrundes die wenigstens eine Ventilöffnung aufweist.

Dabei wird die einfache Funktions- und Bauweise der erfindungsgemäßen Durchflussmengenregler-Einheit noch zusätzlich begünstigt, wenn der Ventilkörper sich von der Offenstellung gegen die Rückstellkraft der Eigenelastizität des für den Ventilkörper verwendeten elastischen Materials in die Schließstellung bewegt.

Eine bevorzugte Weiterbildung von eigener schutzwürdiger Bedeutung sieht vor, dass der Ringkanal des zumindest einen Schließventils an einer innenliegenden und/oder außenliegenden Kanalwandung eine Profilierung aufweist. Durch diese Profilierung, die hier an der außenliegenden Kanalwandung des Ringkanales vorgesehen ist, lässt sich eine bessere Steuerbarkeit des Schließventiles während des Schließvorganges erreichen und störende Geräusche sowie Vibrationen während des Schließvorganges können vermieden werden. Dabei bewirkt die Profilierung im Schließventil, dass sich über den Umfang des Ringkanales kein konstantes Geschwindigkeitsprofil des durchfließenden Wassers ergibt, sondern dass durch die Profilierung sowie die dadurch bedingten Abstände die Ausbildung eines gleichmäßigen Geschwindigkeits- beziehungsweise Druckprofils gestört wird, wodurch ein unerwünschtes und mit störenden Geräuschen sowie Vibrationen verbundenes Aufschwingen vermieden wird.

Die an den Kanalwandungen der für die Durchflussmengenregler sowie für das Schließventil bestimmten Ringkanäle vorgesehenen Profilierungen können umlaufend an der Kanalwandung ausgestaltet sein.

Dabei sieht eine bevorzugte Ausführungsform gemäß der Erfindung vor, dass die Profilierung(en) des wenigstens einen Durchflussmengenreglers und/oder des wenigstens einen Schließventiles aus in Durchströmrichtung orientierten und einander abwechselnden Einsenkungen und Ausformungen gebildet ist. Dabei kann jede Ausformung eine gerundete und vorzugsweise eine halbrunde Querschnittskontur aufweisen. Demgegenüber sieht eine bevorzugte Ausführungsform gemäß der Erfindung vor, dass jede Einsenkung als der zwischen zwei, vorzugsweise unmittelbar aneinander angrenzende Ausformungen angeordnete Bereich ausgebildet ist.

Weiterbildungen gemäß der Erfindung ergeben sich aus den Ansprüchen sowie der Zeichnung in Verbindung mit der Beschreibung. Nachstehend wird die Erfindung anhand eines bevorzugten Ausführungsbeispieles noch näher beschrieben.

Es zeigt:
- Figur 1: eine in einer perspektivischen Darstellung gezeigte Durchflussmengenregler-Einheit, die mit ihrem Einsetzgehäuse in eine Fluidleitung einsetzbar ist, wobei die Durchflussmengenregler-Einheit in ihrem Einsetzgehäuse eine außenliegende Ringnut aufweist, die eine Gehäusefläche umgrenzt, in welcher Gehäusefläche hier drei weitere innenliegende Ringnuten vorgesehen sind, deren Mittelpunkt jeweils außerhalb der von den anderen innenliegenden Ringnuten umgrenzten Gehäusefläche angeordnet ist,
- Figur 2: die Durchflussmengenregler-Einheit aus Figur 1 in einer Draufsicht auf ihre Zuströmseite,
- Figur 3: die Durchflussmengenregler-Einheit aus den Figuren 1 und 2 in einem Längsschnitt durch Schnittebene III-III aus Figur 2,
- Figur 4: die Durchflussmengenregler-Einheit aus den Figuren 1 bis 3 in einer Unteransicht auf ihre Abströmseite, und
- Figur 5: die Durchflussmengenregler-Einheit aus den Figuren 1 bis 4 in einer auseinandergezogenen perspektivischen Darstellung ihrer einzelnen Bestandteile.

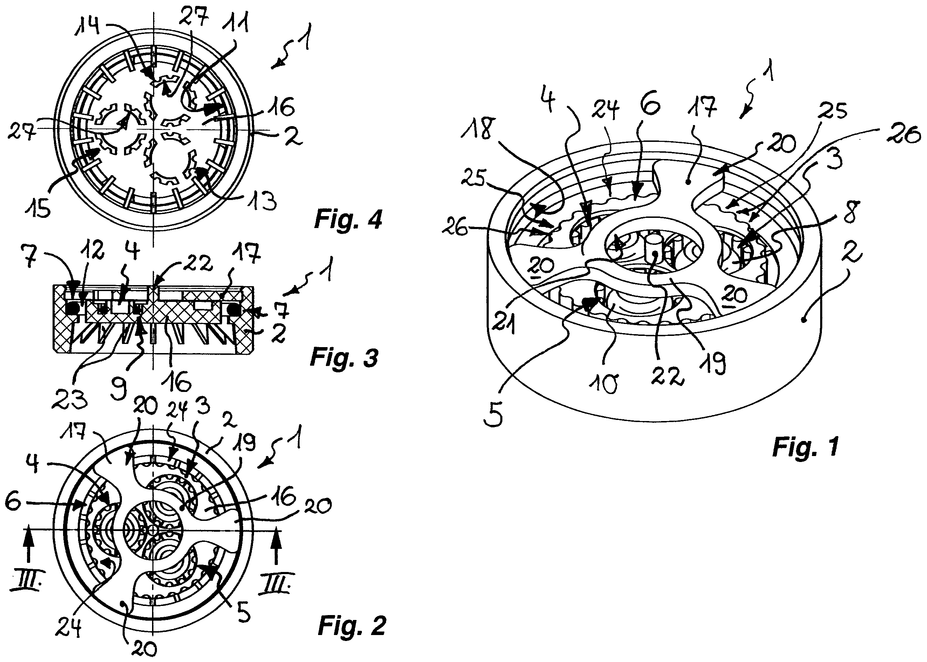

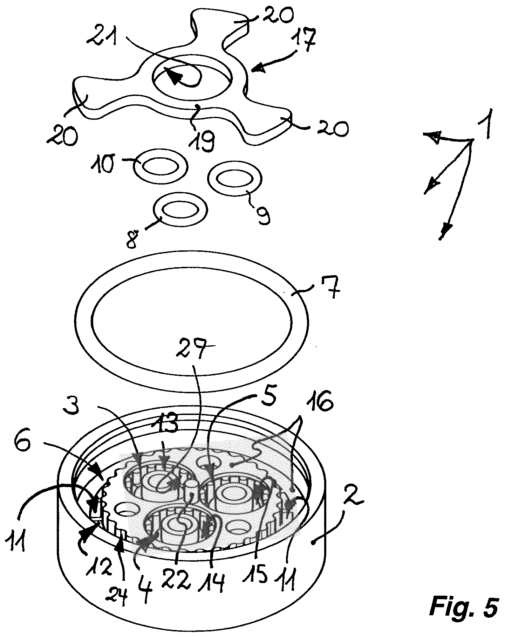

In den Figuren 1 bis 5 ist eine Durchflussmengenregler-Einheit 1 dargestellt. Die Durchflussmengenregler-Einheit 1 weist ein Einsetzgehäuse 2 auf, das in eine hier nicht weiter dargestellte Fluidleitung einsetzbar ist. Im Einsetzgehäuse 2 dieser Durchflussmengenregler-Einheit 1 sind mehrere Durchströmwege vorgesehen, von denen in wenigstens einem Durchströmweg jeweils ein Durchflussmengenregler 3, 4, 5 angeordnet ist. Die Durchflussmengenregler 3, 4, 5 der Durchflussmengenregler-Einheit 1 sollen die durch sie pro Zeiteinheit durchfließende Fluidmenge jeweils auf einen durckunabhängigen festgelegten Maximalwert einregeln. In mindestens einem weiteren Durchströmweg ist jeweils ein Schließventil 6 vorgesehen, das von einer Offenstellung unter dem Druck des anströmenden Fluids gegen eine Rückstellkraft in eine Schließstellung bewegbar ist. Bei niedrigen Drücken, bei denen das mindestens eine Schließventil 6 in seiner Offenstellung verharrt, kann über das Schließventil 6 eine zusätzliche Fluidmenge durch die Durchflussmengenregler-Einheit 1 strömen. Mit demgegenüber steigendem Druck des Fluids bewegt sich der Ventilkörper 7 des Schließventils 6 in die Schließstellung, so dass nun die Durchflussmengenregler 3, 4, 5 die Durchflussleistung der Durchflussmengenregler-Einheit 1 einregeln können. Dabei können diese Durchflussmengenregler 3, 4, 5 nicht nur auf denselben Maximalwert der Durchflussleistung festgelegt sein, sondern sich auch in der Weise ergänzen, dass diese Durchflussmengenregler 3, 4, 5 auf unterschiedliche Maximalwerte der Durchflussleistung einregeln. Dazu können die Durchflussmengenregler 3, 4, 5 unterschiedlich ausgestaltete Regelprofilierungen und/oder Drosselkörper 8, 9, 10 aufweisen, die sich in der Elastizität des verwendeten Materials und/oder in der Elastizität der Querschnittsform entsprechend unterscheiden. Dabei weisen die Durchflussmengenregler 3, 4, 5 und das wenigstens eine Schließventil 6 jeweils einen ringförmigen Drossel- beziehungsweise Ventilkörper 8, 9, 10; 7 aus elastischem Material auf, der sich unter dem Druck des anströmenden Fluids derart verformt, dass die Durchflussmengenregler 3, 4, 5 jeweils einen Regelspalt verengen und das mindestens eine Schließventil 6 zumindest eine Ventilöffnung 11 verschließt.

Im Einsetzgehäuse 2 der Durchflussmengenregler-Einheit 1 ist dazu ein erster außenliegender Ringkanal 12 vorgesehen, der entweder einem der Durchflussmengenregler oder - wie hier - dem Schließventil 6 zugeordnet sein kann. Dieser außenliegende Ringkanal 12 umgrenzt eine Gehäusefläche des Einsetzgehäuses 2, in der wenigstens zwei und hier drei innenliegende Ringkanäle 13, 14, 15 vorgesehen sind, deren Mittelpunkt jeweils außerhalb der von den anderen innenliegenden Ringkanälen 13, 14 beziehungsweise 15 umgrenzten Gehäusefläche angeordnet ist. Die innenliegenden Ringkanäle 13, 14, 15 und hier auch zusätzlich der äußere erste Ringkanal 12 sind somit nicht konzentrisch zueinander angeordnet.

Durch diese, in ihrer Anordnung weitestgehend unabhängigen Ringkanäle 12, 13, 14, 15 lässt sich die Durchflussmengenregler-Einheit 1 derart auslegen, dass sie sowohl bei sehr niedrigen Drücken als auch bei hohen Drücken funktionsgerecht und vorteilhaft einsetzbar ist. Wie aus den Figuren 1, 2 und 5 deutlich wird, ist das Einsetzgehäuse 2 der Durchflussmengenregler-Einheit 1 hülsenförmig ausgebildet. Im Hülseninneren des Einsetzgehäuses 2 ist eine quer zur Durchströmrichtung orientierte Trägerplatte 16 vorgesehen, welche die Ringkanäle 12, 13, 14, 15 aufweist. Die Trägerplatte 16 kann in das Einsetzgehäuse 2 eingelegt sein. In dem hier dargestellten Ausführungsbeispiel ist die Trägerplatte 16 in das Einsetzgehäuse 2 einstückig eingeformt und wird an ihrer Abströmseite dazu von Halterippen 23 getragen, die einerseits an der Trägerplatte 16 und andererseits an der Gehäuseumfangswandung angreifen.

Die Ventil- oder Drosselkörper 7; 8, 9, 10 sind von der zuströmseitigen Gehäusestirnseite aus in die Ringkanäle 12; 13, 14, 15 eingesetzt. Dabei werden die Ventil- und Drosselkörper 7; 8, 9, 10 mittels eines gemeinsamen Sicherungselements 17 in den ihnen zugeordneten Ringkanälen 12, 13, 14, 15 gesichert. Das in den Figuren 1, 2 und 5 besonders gut erkennbare Sicherungselement 17 ist an dem zuströmseitig vor der Trägerplatte 16 angeordneten Gehäuseteilbereich an dessen Gehäuseinnenumfang gehalten. Das gemeinsame Sicherungselement 17 hat einen Sicherungselemente-Kern 19, von dem aus hier drei Sicherungsarme 20 nach außen vorstehen. Die den außenliegenden Umfangsrand des Sicherungselementes 17 bildenden freien Armenden der Sicherungsarme 20 greifen in eine Haltenut 18 ein, die an dem vor der Trägerplatte 16 angeordneten Gehäuseteilbereich innenumfangsseitig angeordnet ist.

Damit das auf der Zuströmseite der Durchflussmengenregler-Einheit 1 angeordnete Sicherungselement 17 nicht den Durchfluss des Fluids durch die Durchflussmengenregler-Einheit 1 beeinträchtigt und stört, weist das Sicherungselement 17 an seinem Sicherungselemente-Kern 19 eine zentrale Durchflussöffnung 21 auf. In den Figuren 2, 4 und 5 ist erkennbar, dass die Mittelpunkte der innenliegenden Ringkanäle 13, 14, 15 in einem Dreieck zueinander angeordnet sind. Das Sicherungselement 17 überdeckt die Ringkanäle 12; 13, 14, 15 der Durchflussmengenregler 3, 4, 5 einerseits sowie des Schließventils 6 andererseits, so dass die in den Ringkanälen 12; 13, 14, 15 befindlichen Ventil- und Drosselkörper 7; 8, 9, 10 dort gesichert sind.

Um die Durchflussmengenregler-Einheit 1 gut handhaben und beispielsweise in die in einer Fluidleitung befindliche Einsetzöffnung einsetzen zu können, weist die Trägerplatte 16 an zumindest einer ihrer Stirnseiten und vorzugsweise - wie hier - an ihrer zuströmseitigen Stirnseite einen vorstehenden Handhabungsstift oder -pin 22 auf. Dieser Handhabungsstift 22 steht etwa koaxial zur Gehäuse-Längsachse des Einsetzgehäuses 2, durch die zentrale Durchflussöffnung 21 des Sicherungselements 17 hindurch, entgegen der Durchströmrichtung an der Trägerplatte 16 vor.

Die Regel- oder Drosselkörper 8, 9, 10 der Durchflussmengenregler 3, 4, 5 begrenzen zwischen sich und einer Regelprofilierung 27 einen Steuerspalt, dessen Durchtrittsquerschnitt durch den sich unter der beim Durchströmen bildenden Druckdifferenz verformenden Drosselkörper 8, 9, 10 veränderbar ist. Dabei ist die Regelprofilierung 27 an einer innenliegenden und zusätzlich oder - wie hier - stattdessen an einer ausliegenden Kanal- oder Umfangswand des zugeordneten Ringkanals 13, 14, 15 vorgesehen.

Der äußere erste Ringkanal 12 des wenigstens einen Schließventiles 6 weist im Bereich ihres Nutgrundes die wenigstens eine Ventilöffnung 11 auf. Der in diesem Ringkanal 12 vorgesehene und ebenfalls aus elastischem Material hergestellte Ventilkörper 7 des Schließventils 6 bewegt sich von der Offenstellung gegen die Rückstellkraft der Eigenelastizität des für den Ventilkörper 7 verwendeten elastischen Materials in die Schließstellung, sobald der Fluiddruck des anströmenden Fluids einen Grenzwert übersteigt. Der Ringkanal 12 des zumindest einen Schließventiles weist an einer innenliegenden und/oder außenliegenden Kanalwandung eine Profilierung 24 auf. Durch diese Profilierung 24 des Schließventiles 6 lässt sich eine verbesserte Steuerbarkeit des Schließventiles 6 während des Schließvorganges erreichen und auch störende Geräusche sowie Vibrationen können verhindert werden. Dabei wird durch die im Schließventil 6 vorgesehene Profilierung 24 ein über den Umfang konstantes Geschwindigkeitsprofil des durchströmenden Wassers wirkungsvoll verhindert, weil durch die infolge der Profilierung 24 bedingten Abstände die Ausbildung eines gleichmäßigen Geschwindigkeits- beziehungsweise Druckprofils des durchströmenden Wassers gestört wird.

Besonders vorteilhaft ist, dass der Ringkanal 12 des zumindest einen Schließventils 6 an einer innenliegenden und/oder außenliegenden Kanalwandung die Profilierung 24 aufweist. Durch diese Profilierung 24, die hier an der innenliegenden Kanalwandung des Ringkanales 12 vorgesehen ist, lässt sich eine bessere Steuerbarkeit des Schließventiles 6 während des Schließvorganges erreichen und störende Geräusche sowie Vibrationen während des Schließvorganges können vermieden werden. Dabei bewirkt die Profilierung 24 im Schließventil 6, dass sich über den Umfang des Ringkanales 12 kein konstantes Geschwindigkeitsprofil des durchfließenden Wassers ergibt, sondern dass durch die Profilierung 24 sowie die dadurch bedingten Abstände die Ausbildung eines gleichmäßigen Geschwindigkeits- beziehungsweise Druckprofils gestört wird, wodurch ein unerwünschtes und mit störenden Geräuschen sowie Vibrationen verbundenes Aufschwingen vermieden wird.

Die an den Kanalwandungen der für die Durchflussmengenregler 3, 4, 5 sowie für das Schließventil 6 bestimmten Ringkanäle 12, 13, 14, 15 vorgesehenen Profilierungen können umlaufend an der Kanalwandung ausgestaltet sein.

Dabei sieht eine bevorzugte Ausführungsform gemäß der Erfindung vor, dass die Regelprofilierung(en) 27 des wenigstens einen Durchflussmengenreglers 3, 4, 5 und die Profilierung 24 des wenigstens einen Schließventiles 6 aus in Durchströmrichtung orientierten und einander abwechselnden Einformungen 25 und Ausformungen 26 gebildet ist. Dabei können die Einformungen 25 und Ausformungen 26 eine gerundete und vorzugsweise eine halbrunde Querschnittskontur aufweisen. Demgegenüber sieht eine weitere, hier nicht gezeigte Ausführungsform gemäß der Erfindung vor, dass jede Einformung 25 als der zwischen zwei, vorzugsweise unmittelbar aneinander angrenzenden Ausformungen 26 angeordnete Bereich ausgebildet ist.

Es ist ein besonderer Vorteil der hier dargestellten Durchflussmengenregler-Einheit 1, die beispielsweise in eine sanitäre Wasserversorgungsleitung einsetzbar ist, dass sie sowohl bei sehr niedrigen Drücken als auch bei sehr hohen Drücken, beispielsweise in einem Bereich zwischen 0,5 und etwa 12 bar vorteilhaft einsetzbar ist.

### Bezugszeichenliste

- 1: Durchflussmengenregler-Einheit
- 2: Einsetzgehäuse
- 3: Durchflussmengenregler
- 4: Durchflussmengenregler
- 5: Durchflussmengenregler
- 6: Schließventil
- 7: Ventilkörper
- 8: Drosselkörper
- 9: Drosselkörper
- 10: Drosselkörper
- 11: Ventilöffnung
- 12: erster Ringkanal
- 13: innenliegender Ringkanal
- 14: innenliegender Rinkanal
- 15: innenliegender Ringkanal
- 16: Trägerplatte
- 17: Sicherungselement
- 18: Haltenut
- 19: Sicherungselemente-Kern
- 20: Sicherungsarme
- 21: zentrale Durchflussöffnung
- 22: Handhabungsstift
- 23: Halterippen
- 24: Profilierung (im Schlußventil 6)
- 25: Einformung
- 26: Ausformung
- 27: Profilierung in den Durchflussmengenreglern 3, 4, 5

## Patentansprüche

1. Durchflussmengenregler-Einheit (1), die ein in eine Fluidleitung einsetzbares Einsetzgehäuse (2) hat, in dem mehrere Durchströmwege vorgesehen sind, von denen in wenigstens einem Durchströmweg jeweils ein Durchflussmengenregler (3, 4, 5) angeordnet ist, der die durch ihn pro Zeiteinheit durchfließende Fluidmenge auf einen druckunabhängigen festgelegten Durchflusswert einregelt und von denen in mindestens einem weiteren Durchströmweg jeweils ein Schließventil (6) vorgesehen ist, das von einer Offenstellung unter dem Druck des anströmenden Fluids gegen eine Rückstellkraft in eine Schließstellung bewegbar ist, wobei der wenigstens eine Durchflussmengenregler (3, 4, 5) und das mindestens eine Schließventil (6) jeweils einen ringförmigen Drossel- beziehungsweise Ventilkörper (8, 9, 10; 7) aus elastischem Material haben, der sich unter dem Druck des anstehenden Fluids derart verformt, dass der wenigstens eine Durchflussmengenregler (3, 4, 5) einen Regelspalt verengt und das mindestens eine Schließventil (6) zumindest eine Ventilöffnung (11) verschließt, und wobei im Einsetzgehäuse (2) Ringkanäle vorgesehen sind, von denen zumindest ein erster Ringkanal (12) als Schließventil (6) eine Gehäusefläche des Einsetzgehäuses (2) umgrenzt, in welcher Gehäusefläche wenigstens ein, in dieser Gehäusefläche relativ zum ersten Ringkanal (12) innenliegender zweiter Ringkanal (13, 14, 15) als Durchflussmengenregler vorgesehen ist, und wobei im Hülseninneren des hülsenförmig ausgebildeten Einsetzgehäuses (2) eine quer zur Durchströmrichtung orientierte Trägerplatte (16) vorgesehen ist, welche Trägerplatte (16) die Ringkanäle (12; 13, 14, 15) aufweist, wobei in der vom ersten Ringkanal (12) des mindestens einen Schließventils (6) umgrenzten Gehäusefläche wenigstens zwei innenliegende zweite Ringkanäle (13, 14, 15) von jeweils einem der Durchflussmengenregler (3, 4, 5) vorgesehen sind, dass die Mittelpunkte dieser wenigstens zwei innenliegenden zweiten Ringkanäle (13, 14, 15) jeweils außerhalb der von den übrigen innenliegenden Ringkanälen (13, 14, 15) der Durchflussmengenregler (3, 4, 5) umgrenzten Teilbereiche der Gehäusefläche angeordnet sind, **dadurch gekennzeichnet dass** die Drossel- und Ventilkörper (8, 9, 10; 7) mittels eines gemeinsamen Sicherungselements (17) in den ihnen zugeordneten Ringkanälen (13, 14, 15; 12) gesichert sind, und dass das gemeinsame Sicherungselement (17) an dem zuströmseitig vor der Trägerplatte (16) angeordneten Gehäuseteilbereich an dem Gehäuseinnenumfang gehalten ist.

2. Durchflussmengenregler-Einheit nach Anspruch 1, **dadurch gekennzeichnet, dass** die Trägerplatte (16) in das Einsetzgehäuse (2) einstückig eingeformt ist.

3. Durchflussmengenregler-Einheit nach Anspruch 1 oder 2, **dadurch gekennzeichnet, dass** die Drossel- oder Ventilkörper (8, 9, 10; 7) von der zuströmseitigen Gehäusestirnfläche in die Ringkanäle (13, 14, 15; 12) eingesetzt sind.

4. Durchflussmengenregler-Einheit nach einem der Ansprüche 1 bis 3, **dadurch gekennzeichnet, dass** das gemeinsame Sicherungselement (17) mit seinem außenliegenden Umfangsrand in einer Haltenut (18) gehalten ist, die an dem vor der Trägerplatte (16) angeordneten Gehäuseteilbereich an dessen Gehäuseinnenumfang vorgesehen ist.

5. Durchflussmengenregler-Einheit nach einem der Ansprüche 1 bis 4, **dadurch gekennzeichnet, dass** das Sicherungselement (17) einen Sicherungselemente-Kern (19) hat, von dem aus vorzugsweise drei Sicherungsarme (20) radial nach außen vorstehen.

6. Durchflussmengenregler-Einheit nach einem der Ansprüche 1 bis 5, **dadurch gekennzeichnet, dass** das Sicherungselement (17) in seinem Sicherungselemente-Kern (19) eine zentrale Durchflussöffnung (21) aufweist.

7. Durchflussmengenregler-Einheit nach einem der Ansprüche 1 bis 6, **dadurch gekennzeichnet, dass** die Mittelpunkte der innenliegenden Ringkanäle (13, 14, 15) in einem Dreieck zueinander angeordnet sind.

8. Durchflussmengenregler-Einheit nach einem der Ansprüche 1 bis 7, **dadurch gekennzeichnet, dass** die Trägerplatte (16) an zumindest einer Stirnseite und vorzugsweise an ihrer zuströmseitigen Stirnseite einen vorstehenden Handhabungsstift (22) trägt.

9. Durchflussmengenregler-Einheit nach einem der Ansprüche 1 bis 8, **dadurch gekennzeichnet, dass** der Handhabungsstift (22) etwa koaxial zur Gehäuse-Längsachse des Einsetzgehäuses (2) an der Trägerplatte (16) vorsteht.

10. Durchflussmengenregler-Einheit nach einem der Ansprüche 1 bis 9, **dadurch gekennzeichnet, dass** der erste Ringkanal (12) dem wenigstens einen Schließventil (6) zugeordnet ist, und dass von den demgegenüber innenliegenden Ringkanälen (13, 14, 15) zumindest zwei jeweils einem Durchflussmengenregler (3, 4, 5) zugeordnet sind.

11. Durchflussmengenregler-Einheit nach einem der Ansprüche 1 bis 10, **dadurch gekennzeichnet, dass** die Drosselkörper (8, 9, 10) der Durchflussmengenregler (3, 4, 5) zwischen sich und einer Regelprofilierung jeweils einen Steuerspalt umgrenzen, dessen Durchtrittsquerschnitt durch den sich unter der beim Durchströmen bildenden Druckdifferenz verformenden Drosselkörper (8, 9, 10) veränderbar ist.

12. Durchflussmengenregler-Einheit nach einem der Ansprüche 1 bis 11, **dadurch gekennzeichnet, dass** die Regelprofilierungen an der innenliegenden und/oder an der außenliegenden Kanalwand des zugeordneten Ringkanals (13, 14, 15) vorgesehen ist.

13. Durchflussmengenregler-Einheit nach einem der Ansprüche 1 bis 12, **dadurch gekennzeichnet, dass** der Ringkanl (12) des wenigstens einen Schließventils (6) im Bereich seines Kanalgrundes die wenigstens eine Ventilöffnung (11) aufweist.

14. Durchflussmengenregler-Einheit nach einem der Ansprüche 1 bis 13, **dadurch gekennzeichnet, dass** der Ventilkörper (7) sich von der Offenstellung gegen die Rückstellkraft der Eigenelastizität des für den Ventilkörper (7) verwendeten elastischen Materials in die Schließstellung bewegt.

15. Durchflussmengenregler-Einheit nach einem der Ansprüche 1 bis 14, **dadurch gekennzeichnet, dass** der Ringkanal (12) des wenigstens einen Schließventiles (6) an einer innenliegenden und/oder außenliegenden Kanalwand eine Profilierung (24) aufweist.

16. Durchflussmengenregler-Einheit nach einem der Ansprüche 1 bis 15, **dadurch gekennzeichnet, dass** die Profilierung(en) des mindestens einen Durchflussmengenreglers (3, 4, 5) und/oder des wenigstens einen Schließventiles (6) an der Kanalwandung des zugeordneten Ringkanales (12, 13, 14, 15) umlaufend ausgestaltet ist/sind.

17. Durchflussmengenregler-Einheit nach einem der Ansprüche 1 bis 16, **dadurch gekennzeichnet, dass** die Regelprofilierung (27) des wenigstens einen Durchflussmengenreglers (3, 4, 5) und/oder die Profilierung (24) des mindestens einen Schließventiles (6) aus in Durchströmrichtung orientierten und einander abwechselnden Einformungen (25) und Ausformungen (26) gebildet ist/sind.

18. Durchflussmengenregler-Einheit nach einem der Ansprüche 1 bis 17, **dadurch gekennzeichnet, dass** die Einformungen (25) und/oder die Ausformungen (26) eine polygone oder eine gerundete, vorzugsweise eine halbrunde, Querschnittskontur aufweisen.

## Claims

1. Flow-rate regulator unit (1) which has an insert housing (2) which is insertable into a fluid line and in which a plurality of throughflow paths are provided, in at least one throughflow path of which in each case one flow-rate regulator (3, 4, 5) which regulates the amount of fluid flowing therethrough per time unit to a pressure-independent determined throughflow value is disposed, and in at least one further throughflow path of which in each case one closing valve (6) which under the pressure of the inflowing fluid is movable counter to a restoring force from an open position into a closing position is provided, wherein the at least one flow-rate regulator (3, 4, 5) and the at least one closing valve (6) in each case have one annular throttle body or valve body (8, 9, 10; 7) of an elastic material, respectively, which under the pressure of the impinging fluid is deformed in such a manner that the at least one flow-rate regulator (3, 4, 5) constricts a regulating gap and the at least one closing valve (6) closes at least one valve opening (11), and wherein in the insert housing (2) annular ducts are provided, of which at least one first annular duct (12) delimits a housing face of the insert housing (2) as a closing valve (6), in which housing face at least one second annular duct (13, 14, 15) which is inboard said housing face relative to the first annular duct (12) is provided as flow-rate regulator, and wherein in the interior of the sleeve of the insert housing (2) which is configured so as to be sleeve-shaped a carrier plate (16) which is oriented so as to be transverse to the throughflow direction is provided and which carrier plate (16) has the annular ducts (12; 13, 14, 15), wherein in the housing face which is delimited by the first annular duct (12) of the at least one closing valve (6) at least two inboard second annular ducts (13, 14, 15) of in each case one of the flow-rate regulators (3, 4, 5) are provided, such that the centers of said at least two inboard second annular ducts (13, 14, 15) in each case are disposed outside the part-regions of the housing face which are delimited by the remaining inboard annular ducts (13, 14, 15) of the flow-rate regulators, **characterized in that** the throttle bodies and valve bodies (8, 9, 10; 7) are secured in the annular ducts (13, 14, 15; 12) assigned thereto by means of a common securing element (17), and **in that** the common securing element (17) is held on the interior housing circumference on the housing part-region which is disposed on the inflow side in front of the carrier plate (16).

2. Flow-rate regulator unit according to Claim 1, **characterized in that** the carrier plate (16) is integrally molded into the insert housing (2).

3. Flow-rate regulator unit according to Claim 1 or 2, **characterized in that** the throttle bodies or valve bodies (8, 9, 10; 7) are inserted into the annular ducts (13, 14, 15; 12) from the inflow-side housing end face.

4. Flow-rate regulator unit according to one of Claims 1 to 3, **characterized in that** the common securing element (17) by way of its outboard circumferential periphery is held in a retaining groove (18) which is provided on the interior housing circumference of the housing part-region which is disposed in front of the carrier plate (16) .

5. Flow-rate regulator unit according to one of Claims 1 to 4, **characterized in that** the securing element (17) has a securing-element core (19) from which preferably three securing arms (20) radially protrude in an outward manner.

6. Flow-rate regulator unit according to one of Claims 1 to 5, **characterized in that** the securing element (17) in its securing-element core (19) has a central throughflow opening (21).

7. Flow-rate regulator unit according to one of Claims 1 to 6, **characterized in that** the centers of the inboard annular ducts (13, 14, 15) are disposed in a triangle in relation to one another.

8. Flow-rate regulator unit according to one of Claims 1 to 7, **characterized in that** the carrier plate (16) on at least one end side, and preferably on the inflow-side end side thereof, has a projecting handling pin (22).

9. Flow-rate regulator unit according to one of Claims 1 to 8, **characterized in that** the handling pin (22) on the carrier plate (16) projects in an approximately coaxial manner in relation to the housing longitudinal axis of the insert housing (2).

10. Flow-rate regulator unit according to one of Claims 1 to 9, **characterized in that** the first annular duct (12) is assigned to the at least one closing valve (6), and **in that** of the inboard annular ducts (13, 14, 15) which lie opposite thereto at least two are in each case assigned to one flow-rate regulator (3, 4, 5).

11. Flow-rate regulator unit according to one of Claims 1 to 10, **characterized in that** the throttle bodies (8, 9, 10) of the flow-rate regulators (3, 4, 5) between themselves and a control profile feature in each case define a control gap, the passage cross section of which is modifiable by the throttle body (8, 9, 10) which is deformed by the pressure differential which is formed during throughflow.

12. Flow-rate regulator unit according to one of Claims 1 to 11, **characterized in that** the control profile features is provided on the inboard and/or on the outboard duct wall of the assigned annular duct (13, 14, 15).

13. Flow-rate regulator unit according to one of Claims 1 to 12, **characterized in that** the annular duct (12) of the at least one closing valve (6) has the at least one valve opening (11) in the region of the duct base of said annular duct (12).

14. Flow-rate regulator unit according to one of Claims 1 to 13, **characterized in that** the valve body (7), counter to the restoring force of the inherent elasticity of the elastic material used for the valve body (7), moves from the open position into the closing position.

15. Flow-rate regulator unit according to one of Claims 1 to 14, **characterized in that** the annular duct (12) of the at least one closing valve (6) has a profile feature (24) on an inboard and/or outboard duct wall.

16. Flow-rate regulator unit according to one of Claims 1 to 15, **characterized in that** the profile feature(s) of the at least one flow-rate regulator (3, 4, 5) and/or of the at least one closing valve (6) are/is configured in an encircling manner on the duct wall of the assigned annular duct (12, 13, 14, 15).

17. Flow-rate regulator unit according to one of Claims 1 to 16, **characterized in that** the control profile feature (27) of the at least one flow-rate regulator (3, 4, 5) and/or the profile feature (24) of the at least one closing valve (6) are/is formed from alternating concave moldings (25) and convex moldings (26) which are oriented in the throughflow direction.

18. Flow-rate regulator unit according to one of Claims 1 to 17, **characterized in that** the concave moldings (25) and/or the convex moldings (26) have a polygonal or a rounded, preferably a semicircular, cross-sectional contour.

## Revendications

1. Unité de régulation du débit (1), qui comprend un boîtier d'insertion (2) insérable dans une conduite de fluide, dans lequel il est prévu plusieurs chemins d'écoulement, parmi lesquels un régulateur de débit (3, 4, 5) est disposé respectivement dans au moins un chemin d'écoulement, lequel régule le débit de fluide le traversant par unité de temps à une valeur de débit fixée indépendante de la pression et parmi lesquels il est prévu dans au moins un autre chemin d'écoulement respectivement une soupape de fermeture (6), qui est déplaçable contre une force de rappel d'une position ouverte à une position fermée sous la pression du fluide entrant, dans laquelle ledit au moins un régulateur de débit (3, 4, 5) et ladite au moins une soupape de fermeture (6) présentent respectivement un corps d'étranglement ou de soupape annulaire (8, 9, 10; 7) en un matériau élastique, qui se déforme sous la pression du fluide entrant, de telle manière que ledit au moins un régulateur de débit (3, 4, 5) étrangle une fente de régulation et que ladite au moins une soupape de fermeture (6) ferme au moins une ouverture de soupape (11), et dans laquelle il est prévu dans le boîtier d'insertion (2) des canaux annulaires, parmi lesquels au moins un premier canal annulaire (12) entoure en guise de soupape de fermeture (6) une face de boîtier du boîtier d'insertion (2), face de boîtier dans laquelle il est prévu en guise de régulateur de débit au moins un second canal annulaire (13, 14, 15) situé à l'intérieur par rapport au premier canal annulaire (12) dans cette face de boîtier, et dans laquelle il est prévu dans l'intérieur de douille du boîtier d'insertion (2) réalisé en forme de douille une plaque de support (16) orientée transversalement à la direction d'écoulement, laquelle plaque de support (16) présente les canaux annulaires (12; 13, 14, 15), dans laquelle il est prévu dans la face de boîtier entourée par le premier canal annulaire (12) de ladite au moins une soupape de fermeture (6) au moins deux seconds canaux annulaires situés à l'intérieur (13, 14, 15) d'un des régulateurs de débit (3, 4, 5) respectivement, dans laquelle les points centraux de ces au moins deux seconds canaux annulaires situés à l'intérieur (13, 14, 15) sont respectivement disposés à l'extérieur des régions partielles de la face de boîtier entourées par les autres canaux annulaires situés à l'intérieur (13, 14, 15) des régulateurs de débit (3, 4, 5),
**caractérisée en ce que** les corps d'étranglement et de soupape (8, 9, 10; 7) sont fixés dans les canaux annulaires (13, 14, 15; 12) qui leur sont associés au moyen d'un élément de fixation commun (17), et **en ce que** l'élément de fixation commun (17) est maintenu à la périphérie du boîtier sur la région partielle du boîtier disposée côté amont avant la plaque de support (16).

2. Unité de régulation du débit selon la revendication 1, **caractérisée en ce que** la plaque de support (16) est formée d'une pièce dans le boîtier d'insertion (2).

3. Unité de régulation du débit selon une revendication 1 ou 2, **caractérisée en ce que** les corps d'étranglement ou de soupape (8, 9, 10; 7) sont insérés dans les canaux annulaires (13, 14, 15; 12) par la face frontale de boîtier côté amont.

4. Unité de régulation du débit selon l'une quelconque des revendications 1 à 3, **caractérisée en ce que** l'élément de fixation commun (17) est maintenu avec son bord périphérique extérieur dans une rainure de maintien (18), qui est prévue sur la région partielle de boîtier disposée avant la plaque de support (16) et à la périphérie intérieure de boîtier de celle-ci.

5. Unité de régulation du débit selon l'une quelconque des revendications 1 à 4, **caractérisée en ce que** l'élément de fixation (17) comporte un noyau d'élément de fixation (19), duquel partent radialement vers l'extérieur de préférence trois bras de fixation (20).

6. Unité de régulation du débit selon l'une quelconque des revendications 1 à 5, **caractérisée en ce que** l'élément de fixation (17) présente dans son noyau d'élément de fixation (19) une ouverture de passage centrale (21).

7. Unité de régulation du débit selon l'une quelconque des revendications 1 à 6, **caractérisée en ce que** les points centraux des canaux annulaires situés à l'intérieur (13, 14, 15) sont disposés en triangle l'un par rapport à l'autre.

8. Unité de régulation du débit selon l'une quelconque des revendications 1 à 7, **caractérisée en ce que** la plaque de support (16) porte sur au moins un côté frontal et de préférence sur son côté frontal amont une tige de manipulation saillante (22).

9. Unité de régulation du débit selon l'une quelconque des revendications 1 à 8, **caractérisée en ce que** la tige de manipulation (22) est saillante sur la plaque de support (16) environ coaxialement à l'axe longitudinal de boîtier du boîtier d'insertion (2).

10. Unité de régulation du débit selon l'une quelconque des revendications 1 à 9, **caractérisée en ce que** le premier canal annulaire (12) est associé à ladite au moins une soupape de fermeture (6), et **en ce que** parmi les canaux annulaires situés à l'intérieur (13, 14, 15) en face de celui-ci au moins deux sont associés respectivement à un régulateur de débit (3, 4, 5).

11. Unité de régulation du débit selon l'une quelconque des revendications 1 à 10, **caractérisée en ce que** les corps d'étranglement (8, 9, 10) des régulateurs de débit (3, 4, 5) délimitent entre eux et un profilage de régulation respectivement une fente de commande, dont la section transversale de passage peut être modifiée par le corps d'étranglement (8, 9, 10) se déformant sous la différence de pression se formant lors de l'écoulement.

12. Unité de régulation du débit selon l'une quelconque des revendications 1 à 11, **caractérisée en ce que** les profilages de régulation sont prévus sur la paroi de canal située à l'intérieur et/ou située à l'extérieur du canal annulaire associé (13, 14, 15).

13. Unité de régulation du débit selon l'une quelconque des revendications 1 à 12, **caractérisée en ce que** le canal annulaire (12) de ladite au moins une soupape de fermeture (6) présente ladite au moins une ouverture de soupape (11) dans la région de son fond de canal.

14. Unité de régulation du débit selon l'une quelconque des revendications 1 à 13, **caractérisée en ce que** le corps de soupape (7) se déplace de la position ouverte à la position fermée contre la force de rappel de l'élasticité propre du matériau élastique utilisé pour le corps de soupape (7).

15. Unité de régulation du débit selon l'une quelconque des revendications 1 à 14, **caractérisée en ce que** le canal annulaire (12) de ladite au moins une soupape de fermeture (6) présente un profilage (24) sur une paroi de canal située à l'intérieur et/ou située à l'extérieur.

16. Unité de régulation du débit selon l'une quelconque des revendications 1 à 15, **caractérisée en ce que** le/les profilage(s) dudit au moins un régulateur de débit (3, 4, 5) et/ou de ladite au moins une soupape de fermeture (6) est/sont formé(s) en périphérie sur la paroi de canal du canal annulaire associé (12, 13, 14, 15).

17. Unité de régulation du débit selon l'une quelconque des revendications 1 à 16, **caractérisée en ce que** le profilage de régulation (27) dudit au moins un régulateur de débit (3, 4, 5) et/ou le profilage (24) de ladite au moins une soupape de fermeture (6) est/sont formé(s) par des creux (25) et des reliefs (26) orientés dans la direction d'écoulement et alternant les unes avec les autres.

18. Unité de régulation du débit selon l'une quelconque des revendications 1 à 17, **caractérisée en ce que** les creux (25) et/ou les reliefs (26) présentent un contour de section transversale polygonal ou arrondi, de préférence semi-circulaire.
